# EUROPEAN PATENT APPLICATION

(11) **EP 2 204 947 A1**
(43) Date of publication of application: **07.07.2010**
(21) Application number: 08861952.3
(22) Date of filing: 09.12.2008
(51) Int. Cl.: H04L 12/24, H04L 12/437, H04B 10/12, H04B 10/20

(54) **METHOD AND NODE DEVICE OF ETHERNET FAILURE DETECTING AND CONVERGING**

(30) Priority: 12.12.2007 CN 200710179347
(71) Applicant: Huawei Technologies Co., Ltd., Longgang District, Shenzhen Guangdong 518129 (CN)
(72) Inventor: TENG, Xindong, Shenzhen Guangdong 518129 (CN)
(74) Representative: Thun, Clemens
(86) International application number: PCT/CN2008/073397
(87) International publication number: WO 2009/076885

(57) **Abstract**

The present invention relates to the communications field, and discloses a method for fault detection and convergence in an Ethernet as well as a node device. The method includes: detecting a link fault according to the OAM protocol; and performing network convergence by using a Layer 2 network protection protocol according to the type of Ethernet after the link fault is detected. The node device includes a detecting module and a converging module. In the embodiments of the present invention, a link fault is detected through the Ethernet OAM; after the link fault is detected, a protection switching protocol is used to perform network convergence, thus increasing the rate of fault detection in the Ethernet.

## Description

### FIELD OF THE INVENTION

The present invention relates to the communications field, and in particular, to a method for fault detection and convergence as well as a node device in the Ethernet.

### BACKGROUND

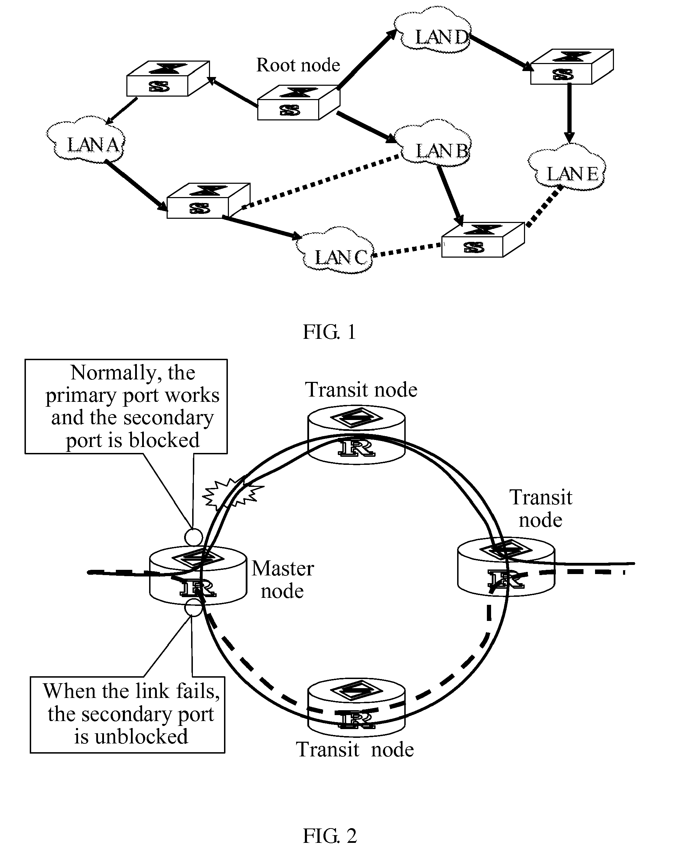

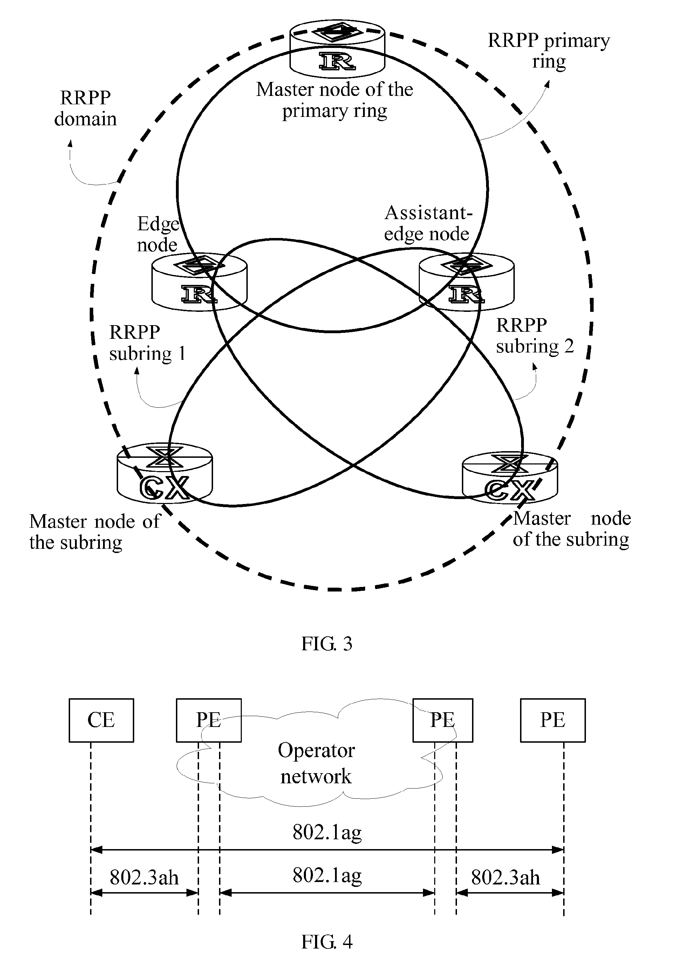

In the prior art, link fault detection and network convergence are performed through the following three protocols in the Ethernet:
(1) The Spanning Tree Protocol (STP) and the Rapid Spanning Tree Protocol (RSTP) are designed to solve the problem of broadcast loops in the Ethernet. As shown in FIG. 1, the principles of STP are: A root node (root bridge) is selected in the network first, information is exchanged between network nodes (bridges or switches) through Bridge Protocol Data Unit (BPDU) packet, and pruning is performed on each node by using a Spanning Tree Algorithm (STA) based on the root node, thus obstructing the redundant link and eliminating possible loops in the network. After converging by using the STP, the paths from the root node to other nodes form a tree structure. After an active path in the network fails (for example, the physical link is blocked), calculation is performed again in the network by using the STP, and the redundant backup link is activated, and the connectivity of the network is recovered, thus implementing self-healing of the network (namely, protection switching).
   It takes a long time, generally a few minutes, for converging again by using the STP, which hardly meets the practical requirements. As a result, the RSTP is put forward. The basic principles of the RSTP are the same as the STP except that convergence time of the network is shortened to a few seconds by optimizing and improving the STP (mainly by changing the mode for the port state switching).
   The basic principles of the Multiple Spanning Tree Protocol (MSTP) are similar to the STP/RSTP. The Virtual Local Area Network (VLAN) is supported in the MSTP.
(2) Ethernet Automatic Protection Switching (EAPS) is put forward by Extreme Networks. It enables self-healing of an Ethernet ring. As shown in FIG. 2, a node in the Ethernet ring is designated as a master node, and other nodes are designated as transit nodes. Two nodes of the master node that connect with the ring network are designated as a primary port and a secondary port. In normal operation, the secondary port is blocked to avoid a loop, and the data packet is transmitted to other nodes through the primary port. When a link fault happens, the faulty node informs the master node of the fault through an EAPS protocol packet. The master node unblocks the secondary port and the data packet is transmitted to other nodes through the secondary port, thus ensuring reachability to all nodes of the ring network. The convergence rate of the EAPS protocol is faster than that of the RSTP. However, the EAPS protocol supports only ring networks rather than networks of any topology.
(3) The Rapid Ring Protection Protocol (RRPP) is an extension to the EAPS protocol. The convergence time of the RRPP is even shorter than that of the EAPS protocol, and the RRPP supports more types of network topology. The RRPP supports not only single-ring structure, but also a structure that one primary ring is accompanied by multiple subrings. FIG. 3 shows an application scenario in which a primary ring is accompanied by two dual-homed subrings. In this scenario, a primary ring and two subrings are designated in the RRPP domain. A master node and transit nodes are designated in the primary ring, and the nodes that intersect with the two subrings are designated as an edge node and an assistant-edge node respectively. A master node and transit nodes of the subring are configured in the subring. In the master node of the primary ring and the master node of the subring respectively, two ports that connect with the ring are designated as a primary port and a secondary port. In normal operation, the secondary ports of the primary ring and the subring are blocked to avoid a loop in the network. The primary port of the master node sends a Continuity Check (CC) message to its secondary port to check continuity. When a fault happens, the faulty node informs the master node of the fault through an RRPP packet. The master node unblocks the secondary port, and instructs other nodes to refresh the relevant forwarding table entries, thus implementing protection switching.

The preceding protocols such as STP (RSTP), EAPS, and RRPP are applicable to preventing a loop of a network in Layer 2. The protocols use a Hello message mechanism or perceive the UP/DOWN event of the port directly to trigger convergence of the protocols, but the problem is the low rate of the convergence.

In the prior art, link fault detection may be performed through Ethernet Operations, Administration, and Maintenance (OAM). The Ethernet OAM involves the protocols such as IEEE 802.3ah, 802.1ag, and ITU-T Y.1731. The OAM not only implements fault detection of point-to-point links (two node devices are linked directly), but also supports end-to-end (multiple nodes exist between two node devices) fault detection. When the point-to-point OAM protocol runs, the link between two nodes cannot include other nodes, and the point-to-point OAM implements operation, administration, and maintenance of the Ethernet physical link. The end-to-end OAM protocol is the service-level Ethernet OAM protocol, and the link between two nodes may include multiple nodes when the end-to-end OAM protocol runs.

As shown in FIG. 4, a Client Edge (CE) device and a Provider Edge (PE) device are linked directly, and link fault detection can be performed between the CE and the PE. Link continuity check may be performed between the PEs (operator network), and end-to-end continuity check may be performed between the CEs.

In the process of developing the present invention, the inventor finds at least the following defects in the prior art:
The fault detection and network convergence rate based on the protocols such as STP (RSTP), EAPS, and RRPP are slow; the OAM protocol specifies no corresponding network convergence mechanism, and cannot implement network convergence after detecting the link fault, which affects the service operation and reduces network reliability.

### SUMMARY

In order to increase the rate of Ethernet link fault detection and convergence, the embodiments of the present invention provide a method and node device for fault detection and convergence in Ethernet. The technical solution under the embodiments of the present invention is as follows:

A method for fault detection and convergence in an Ethernet in an embodiment of the present invention includes:
detecting a link fault according to the Operations, Administration, and Maintenance (OAM) protocol; and
performing network convergence by using a Layer 2 network protection protocol according to the type of the Ethernet after the link fault is detected.

A node device in an embodiment of the present invention includes:
a detecting module 301, configured to detect a link fault according to the Operations, Administration, and Maintenance (OAM) protocol; and
a converging module 302, configured to perform network convergence by using a Layer 2 network protection protocol according to the type of Ethernet after the detecting module 301 detects the link fault.

The technical solution under the embodiments of the present invention brings the following benefits:
In the embodiments of the present invention, a link fault is detected through the Ethernet OAM; after the link fault is detected, network convergence is performed by using a Layer 2 network protection protocol according to the type of Ethernet, thus increasing the rate of network fault detection.

### BRIEF DESCRIPTION OF THE DRAWINGS

FIG. 1 shows application of an STP/RSTP application in the prior art;
FIG. 2 shows application of an EAPS protocol in an Ethernet ring in the prior art;
FIG. 3 shows application of an RRPP protocol in an Ethernet ring in the prior art;
FIG. 4 shows Ethernet OAM fault detection in the prior art;
FIG. 5 is a flowchart of a method for fault detection and convergence in an Ethernet in Embodiment 1 of the present invention;
FIG. 6 shows application of the method for fault detection and convergence in a universal Ethernet in Embodiment 1 of the present invention;
FIG. 7 is a flowchart of a method for fault detection and convergence in an Ethernet in Embodiment 2 of the present invention;
FIG. 8 shows application of the method for fault detection and convergence in an Ethernet in Embodiment 2 of the present invention;
FIG. 9 shows application of the method for fault detection and convergence when a transit device is included between two nodes in Embodiment 2 of the present invention;
FIG. 10 shows a structure of a node device in Embodiment 3 of the present invention;
FIG. 11 shows another structure of a node device in Embodiment 3 of the present invention; and
FIG. 12 shows another structure of a node device in Embodiment 3 of the present invention.

### DETAILED DESCRIPTION OF THE EMBODIMENTS

In order to make the technical solution, objectives, and merits of the embodiments of the present invention clearer, the following describes the embodiments of the present invention in more detail with reference to the accompanying drawings.

In the embodiments of the present invention, a link fault is detected through the OAM protocol in an Ethernet, and after the link fault is detected, network convergence is performed by using a Layer 2 network protection protocol according to the type of the Ethernet , thus increasing the rate of fault detection.

A method for fault detection and convergence in an Ethernet in an embodiment of the present invention includes:
detecting a link fault according to the OAM protocol; and
performing network convergence by using a Layer 2 network protection protocol according to the type of the Ethernet after the link fault is detected.

### Embodiment 1

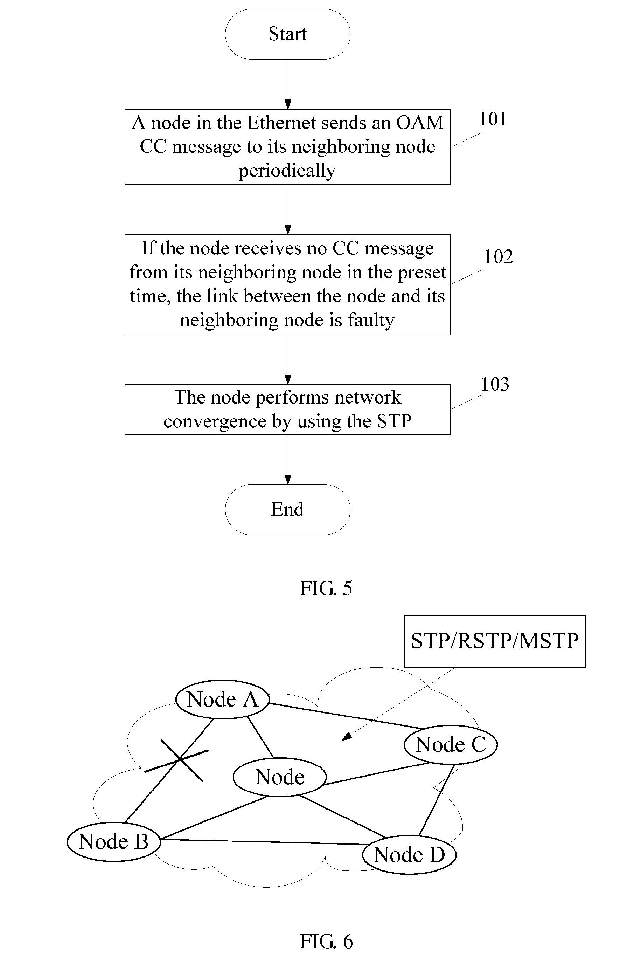

This embodiment takes a universal Ethernet (that is, Ethernet of any topology) as an example. First, the OAM protocol works in the Ethernet to detect a link fault between nodes. If the link fault is detected, protection switching is performed by using the STP. As shown in FIG. 5, a method for fault detection and convergence in an Ethernet in this embodiment includes:

101: A node in the Ethernet sends an OAM CC message to a neighboring node periodically to detect a fault on the link between the nodes.

FIG. 6 shows a structure of a universal Ethernet. In this Ethernet, each node sends an OAM CC message to its neighboring node to check whether the link between the nodes is normal.

102: If the node receives no CC message from its neighboring node in the preset time, the link between the node and its neighboring node is faulty.

As shown in FIG. 6, if the link between node A and node B is faulty, node A receives no CC message from node B in the preset time; likewise, node B receives no CC message from node A. In this case, node A and node B determine that the link between node A and node B is faulty.

103: The node performs network convergence by using the STP.

In this embodiment, after the link fault is detected, the node performs network convergence by using the STP, as detailed below:
The node sends a message indicating the link fault to other nodes in the Ethernet according to the STP; and
   after receiving the message indicating the link fault, other nodes clear their forwarding table, and recalculate the network forwarding path according to the STP to implement network convergence.
Further, in this embodiment, it may be judged through the OAM whether the link quality is deteriorated according to the performance parameters such as error frames and numbers of error frames in the periodicity, namely, the unilateral continuity or quality deterioration may be detected through the OAM. In this case, the STP may be used for recalculating a link which involves good quality.
In the foregoing embodiment, after a link fault is detected through the OAM protocol, network convergence may be performed by using the RSTP/MSTP. The detailed convergence process is similar to block 102, and is not repeated here any further.
In this embodiment, a link fault is detected through the OAM protocol in a universal Ethernet, thus increasing the rate of fault detection in the network, and after the link fault is detected, network convergence is performed by using the STP/RSTP/MSTP in time, thus improving the network reliability.

### Embodiment 2

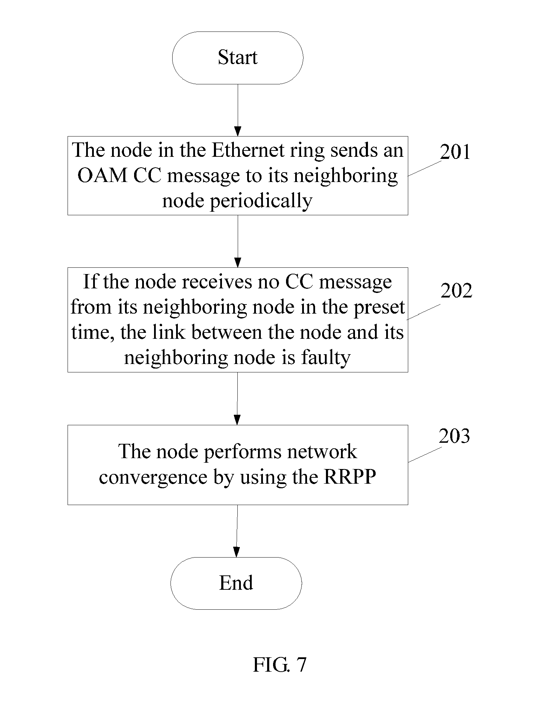

This embodiment takes an Ethernet ring (an Ethernet of a ring topology) as an example. In an Ethernet ring, after a link fault is detected through the OAM protocol, network convergence may be performed by using the RRPP. As shown in FIG. 7, a method for fault detection and convergence in an Ethernet in this embodiment includes:
201: A node in the Ethernet ring sends an OAM CC message to its neighboring node periodically.
202: If the node receives no CC message from its neighboring node in the preset time, the link between the node and its neighboring node is faulty.
203: The node performs network convergence by using the RRPP.

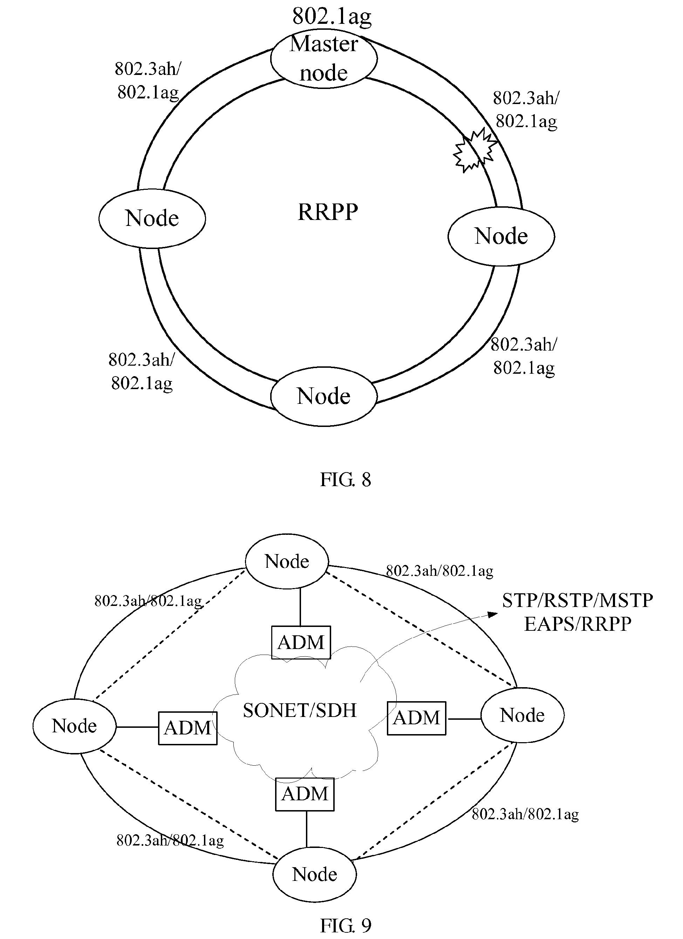

After the link fault is detected, the node performs network convergence by using the RRPP, as detailed below:
The node sets its faulty port to the Down state according to the RRPP, and sends a message indicating the link fault to the master node in the Ethernet ring through another port;
   after receiving the message indicating the link fault, the master node sets its secondary port to a forwarding state, and sends a message for notifying the link fault to other nodes except the master node in the Ethernet ring through its primary port and secondary port according to the RRPP; and
   after receiving the message for notifying the link fault, the other nodes clear their forwarding table and perform network convergence.
As shown in FIG. 8, after a fault occurs on the link between the master node and its neighboring transit node, the transit node sends a message indicating the link fault according to the RRPP to the master node through another port that connects with the Ethernet ring.

Further, in this embodiment, to prevent that a node is faulty and is unable to report the fault, the OAM protocol may run between the primary port and the secondary port of the master node to check continuity of the link while a link fault is detected through the OAM protocol. As shown in FIG. 8, while each node sends an OAM CC message to its neighboring node to detect a link fault, the OAM protocol may run between the primary port and the secondary port of the master node to check continuity of the link.

In Embodiment 2, after a link fault is detected through the OAM protocol, network convergence may be performed by using the EAPS protocol. The detailed convergence process is similar to block 202, and is not repeated here any further.

Further, in Embodiment 1 and Embodiment 2 above, a transit device may exist between two nodes in the Ethernet. As shown in FIG. 9, a Synchronous Digital Hierarchy (SDH) protocol runs in a Synchronous Optical Network (SONET). The node is connected with the network through an Add-Drop Multiplexer (ADM). In this case, a link fault may also be detected through the OAM protocol. After the link fault is detected, network convergence is performed by using the corresponding protocol, thus implementing protection switching. The method for fault detection and convergence in a universal Ethernet is the same as the method in Embodiment 1, and the method for the fault detection and convergence in an Ethernet ring is the same as the method in Embodiment 2.

In this embodiment, a link fault is detected through the OAM protocol in an Ethernet ring, thus increasing the rate of fault detection in the network, and after the link fault is detected, network convergence is performed by using the RRPP/EAPS in time, thus improving the network reliability.

### Embodiment 3

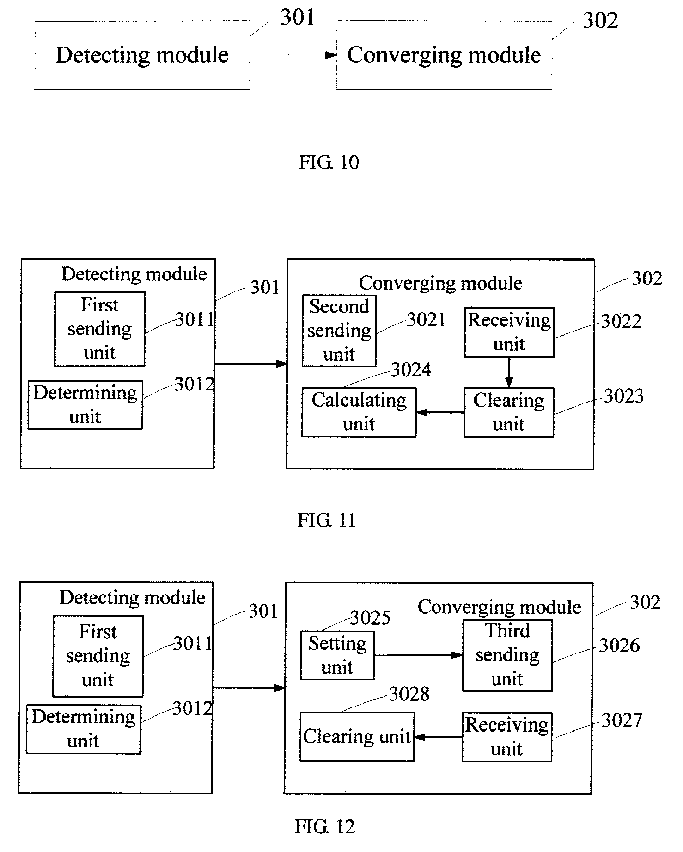

As shown in FIG. 10, a node device provided in this embodiment includes:
a detecting module 301, configured to detect a link fault according to the OAM protocol; and
a converging module 302, configured to perform network convergence by using a Layer 2 network protection protocol according to the type of the Ethernet after the detecting module 301 detects the link fault.

As shown in FIG. 11, the detecting module 301 may include:
a sending unit 3011, configured to send an OAM CC message to a neighboring node device of the node device periodically; and
a determining unit 3012, configured to determine that the link between the node device and the neighboring node device is faulty if the node device receives no CC message sent by the neighboring node device of the node device in the preset time.

Further, if the Ethernet is a universal Ethernet, the converging module 302 may include:
a sending unit 3021, configured to send a message indicating the link fault to other node devices in the Ethernet according to the STP after the detecting module 301 detects the link fault;
a receiving unit 3022, configured to receive a message indicating the link fault sent by the other node devices;
a clearing unit 3023, configured to clear the forwarding table of the node device after the receiving unit 3022 receives the message indicating the link fault; and
a calculating unit 3024, configured to recalculate the network forwarding path according to the STP.

Further, as shown in FIG. 12, if the Ethernet is an Ethernet ring, the converging module 302 may include:
a setting unit 3025, configured to set the faulty port of the node device to a Down state according to the RRPP after the detecting module 301 detects the link fault;
a sending unit 3026, configured to send a message indicating the link fault to the master node device in the Ethernet ring through another port of the node device;
a receiving unit 3027, configured to receive a message for notifying the link fault sent by the master node device; and
a clearing unit 3028, configured to clear the forwarding table of the node device after the receiving unit 3027 receives the message for notifying the link fault sent by the master node device.

In this embodiment, the detecting module 301 detects a link fault according to the OAM protocol, thus increasing the rate of fault detection in the network; after the detecting module 301 detects the link fault, the converging module 302 performs network convergence by using a Layer 2 network protection protocol according to the type of the Ethernet. For example, the converging module 302 performs network convergence by using the STP in a universal Ethernet and using the RRPP in an Ethernet ring, thus improving the network reliability.

The embodiments of the present invention may be implemented through software. The software may be stored in a readable storage medium such as computer hard disk, floppy disk, or CD-ROM.

Although the invention has been described through some exemplary embodiments, the invention is not limited to such embodiments. It is apparent that those skilled in the art can make modifications and variations to the invention without departing from the scope of the invention. The invention is intended to cover the modifications and variations provided that they fall in the scope of protection defined by the following claims or their equivalents.

## Claims

1. A method for fault detection and convergence in an Ethernet, comprising:
detecting a link fault according to the Operations, Administration, and Maintenance (OAM) protocol; and
performing network convergence by using a Layer 2 network protection protocol according to the type of the Ethernet after the link fault is detected.

2. The method for fault detection and convergence in an Ethernet according to claim 1, wherein the detecting a link fault according to the OAM protocol comprises:
sending, by a node, an OAM Continuity Check (CC) message to a neighboring node of the node periodically; and
determining, by the node, a link between the node and the neighboring node is faulty if the node receives no CC message from the neighboring node in preset time.

3. The method for fault detection and convergence in an Ethernet according to claim 1 or claim 2, wherein if the Ethernet is a universal Ethernet, the performing network convergence by using a Layer 2 network protection protocol according to the type of the Ethernet comprises:
sending, by the node, a message indicating the link fault to other nodes in the Ethernet according to the Spanning Tree Protocol (STP); and
clearing, by the other nodes, their forwarding tables and recalculating a network forwarding path according to the STP after receiving the message indicating the link fault.

4. The method for fault detection and convergence in an Ethernet according to claim 1 or claim 2, wherein if the Ethernet is an Ethernet ring, the performing network convergence by using a Layer 2 network protection protocol according to the type of the Ethernet comprises:
setting, by the node, its faulty port to a Down state according to the Rapid Ring Protection Protocol (RRPP), and sending a message indicating the link fault to a master node in the Ethernet ring through another port;
setting, by the master node, its secondary port to a forwarding state after receiving the message indicating the link fault, and sending a message for notifying the link fault to other nodes except the master node in the Ethernet ring through its primary port and secondary port according to the RRPP; and
clearing, by the other nodes, their forwarding tables after receiving the message for notifying the link fault.

5. A node device, comprising:
a detecting module (301), configured to detect a link fault according to the Operations, Administration, and Maintenance (OAM) protocol; and
a converging module (302), configured to perform network convergence by using a Layer 2 network protection protocol according to the type of Ethernet after the detecting module (301) detects the link fault.

6. The node device of claim 5, wherein the detecting module (301) comprises:
a sending unit (3011), configured to send an OAM Continuity Check (CC) message to a neighboring node device of the node device periodically; and
a determining unit (3012), configured to determine that a link between the node device and the neighboring node device is faulty if the node device receives no CC message sent by the neighboring node device of the node device in the preset time.

7. The node device of claim 5 or claim 6, wherein if the Ethernet is a universal Ethernet, the converging module (302) comprises:
a sending unit (3021), configured to send a message indicating the link fault to other node devices in the Ethernet according to the Spanning Tree Protocol (STP) after the detecting module (301) detects the link fault;
a receiving unit (3022), configured to receive a message indicating the link fault sent by the other node devices;
a clearing unit (3023), configured to clear a forwarding table of the node device after the receiving (3022) unit receives the message indicating the link fault; and
a calculating unit (3024), configured to recalculate a network forwarding path according to the STP.

8. The node device of claim 5 or claim 6, wherein if the Ethernet is an Ethernet ring, the converging module (302) comprises:
a setting unit (3025), configured to set a faulty port of the node device to a Down state according to the Rapid Ring Protection Protocol (RRPP) after the detecting module (301) detects the link fault;
a sending unit (3026), configured to send a message indicating the link fault to a master node device in the Ethernet ring through another port of the node device;
a receiving unit (3027), configured to receive a message for notifying the link fault sent by the master node device; and
a clearing unit (3028), configured to clear a forwarding table of the node device after the receiving unit (3027) receives the message for notifying the link fault sent by the master node device.
